# DEMANDE DE BREVET EUROPEEN

(11) **EP 1 158 394 A1**
(43) Date de publication de la demande: **28.11.2001**
(21) Numéro de dépôt: 01401225.6
(22) Date de dépôt: 14.05.2001
(51) Int. Cl.: G06F 3/033

(54) **Interface graphique permettant des associations entre éléments graphiques**

(30) Priorité: 22.05.2000 FR 0006500
(71) Demandeur: ALCATEL, 75008 Paris (FR)
(72) Inventeur: Daurensan, Véronique, 92160 Antony (FR); Lachaud, Philippe, 91120 Palaiseau (FR)
(74) Mandataire: Sciaux, Edmond

(57) **Abrégé**

Procédé pour manipuler sur un moyen de visualisation, un ensemble d'éléments graphiques dont le comportement est déterminé par des événements, caractérisé en ce que :
- On associe au moins un premier élément graphique ou élément d'interface à un second élément graphique,
- À la réception d'un événement, ledit second élément graphique transmet ledit événement audit au moins un premier élément graphique ou élément d'interface.

## Description

La présente invention concerne les interfaces utilisateurs graphiques (GUI pour *graphic user interface*, en langue anglaise) permettant les interactions entre un système de traitement de l'information (par exemple un ordinateur) et un opérateur. L'invention s'applique particulièrement bien dès lors que l'interface utilisateur graphique comporte de très nombreux éléments graphiques, comme cela peut par exemple être le cas dans les systèmes de supervisions.

Une interface utilisateur peut comporter des éléments graphiques qui sont représentés au sein d'une fenêtre graphique, en plus des éléments d'interfaces (fenêtres, boutons, cases à cocher...).
Dans les systèmes de supervision (par exemple un réseau de gestion des télécommunications ou TMN pour *Telecommunication Management Network*, en anglais), il est courant de devoir afficher de nombreuses informations à l'utilisateur. Par exemple, on peut prévoir d'afficher une ou plusieurs élément graphique pour chaque élément supervisé par le système (par exemple une représentation symbolique de l'élément supervisé et des informations textuelles associées). Dans la mesure où les systèmes supervisés sont souvent de taille importante, il peut arriver que l'écran soit saturé d'éléments graphiques, au point que la lecture en devienne difficile.
Le plus souvent, plusieurs éléments graphiques sont liés entre eux par un lien de dépendance sémantique, par exemple du fait qu'ils concernent un même élément supervisé. Dans ce cas, ils sont généralement manipulés par l'utilisateur de façon similaire en leur appliquant des actions identiques (mise en icône, déplacement etc.). De façon similaire, il est possible d'associer à un élément graphique, un élément d'interface, typiquement une fenêtre.

Il important de noter que dans le cadre d'un système de supervision, il importe que l'opérateur réagisse rapidement à une défaillance du système supervisé. Cette défaillance peut entraîner effectivement une discontinuité du service fourni par le système supervisé (impossibilité d'utiliser un réseau de télécommunication, par exemple), ou avoir des répercutions plus grave encore (par exemple dans le cas d'un système de gestion d'une centrale nucléaire).
Or, d'une façon générale, plus le nombre d'éléments graphiques ou d'interface affichés simultanément sur un écran est important, plus l'utilisateur aura de difficultés à trouver l'information pertinente.
De même, si l'opérateur veut modifier l'apparence physique d'un élément graphique (c'est-à-dire le déplacer, le réduire ou l'agrandir, le transformer en icône etc.), il aura généralement à répéter sa manoeuvre pour l'ensemble des éléments graphiques ou d'interface qui lui sont liés, ce qui, là encore, surcharge l'utilisateur et est susceptible d'amoindrir sa vitesse de réaction à une défaillance.

Le but de l'invention est donc de fournir un mécanisme simplifiant la manipulation d'un grand nombre d'éléments graphiques d'une interface graphique, en prenant en compte les dépendances entre les éléments graphiques et d'interfaces.
À cette fin, l'invention a pour objet un procédé pour manipuler sur un moyen de visualisation, un ensemble d'éléments graphiques et d'interfaces dont le comportement est déterminé par des événements. Ce procédé se caractérise en ce qu'il comporte les étapes suivantes :
- On associe au moins un premier élément graphique ou d'interface à un second élément graphique,
- À la réception d'un événement, ce second élément graphique transmet l'événement à ce ou ces premiers éléments graphiques ou d'interface.

L'invention a aussi pour objet une interface graphique permettant de mettre en oeuvre ce procédé, c'est-à-dire une interface graphique composée d'un ensemble d'éléments graphiques et d'interface dont le comportement est déterminé par des événements qui se caractérise en ce que chaque premier élément graphique ou d'interface possède des moyens d'association pour l'associer à un second élément graphique, et en ce que ce second élément graphique possède des moyens pour transmettre les événements qu'il reçoit vers ces premiers éléments graphiques ou d'interface auquel il est associé.

L'invention, ses caractéristiques et ses avantages vont maintenant être plus clairement exposés dans la description suivante d'une mise en oeuvre, en liaison avec les figures jointes.
La figure 1 représente un exemple d'interface graphique comportant un ensemble d'éléments graphiques.
La figure 2 illustre un élément graphique.

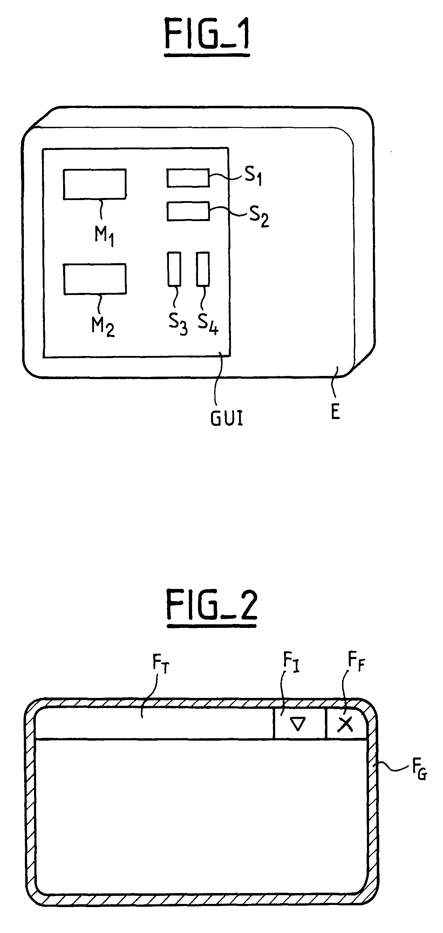

Sur la figure 1, on a représenté un moyen de visualisation E, tel un écran d'un ordinateur sur lequel est affichée l'interface utilisateur d'un logiciel. Cette interface utilisateur graphique (GUI) comporte un ensemble d'éléments graphiques ou d'interface (S₁, S₂, S₃, S₄, M₁, M₂).
Conformément à l'invention, ces éléments graphiques ou d'interface sont susceptibles de recevoir des événements, par exemple de la part de l'utilisateur et par exemple au moyen d'un dispositif de pointage tel une souris. Ces événements peuvent être un redimensionnement de l'élément graphique, un déplacement, une fermeture, une mise en icône etc. Un autre événement peut être provoqué dans le cas où l'élément graphique ou d'interface est caché par un autre élément graphique ou d'interface ou bien parce qu'un déroulement d'un élément d'interface, telle une fenêtre graphique, le contenant l'a fait sortir en dehors de la zone visible.

La figure 2 représente un schéma agrandi d'un élément d'interface particulier. On voit qu'il dispose de plusieurs moyens permettant de recevoir des événements. Par exemple, il dispose d'un contour F_{c} permettant son redimensionnement, d'une barre de titre F_{T} permettant son déplacement, d'un premier bouton F_{F} permettant sa fermeture et d'un second bouton F_{I} permettant sa mise en icône.
Le comportement de chaque élément graphique ou d'interface est déterminé par les événements provenant notamment de l'utilisateur. Plus précisément, dans l'exemple de la figure 2, l'élément d'interface sera redimensionné, déplacé, fermé ou mis en icône suivant que l'utilisateur utilise son moyen de pointage pour agir sur, respectivement, le contour F_{c}, la barre de titre F_{T}, le premier bouton F_{F}, ou le second bouton F_{I}.

Selon l'invention, chaque élément graphique dispose de surcroît de moyens d'association qui permettent de créer des liens de dépendance entre les éléments graphiques. Par exemple, il est possible de lier les éléments graphiques ou d'interface S₁, S₂, S₃ et S₄ à l'élément graphique M₁.
Pour prendre un cas concret, cela peut être utile si les éléments graphiques S₁, S₂, S₃, et S₄ comportent des informations détaillant celles représentées dans l'élément graphique M₁ de façon plus sommaire.
Dans l'exemple d'un système de gestion de réseau, l'élément graphique M₁ peut représenter un sous-réseau tandis que les éléments graphiques S₁, S₂, S₃ et S₄ peuvent représenter les éléments de réseau (c'est-à-dire, par exemple, un commutateur) qui composent ce sous-réseau.
Dans un autre exemple, l'élément graphique M₁ peut représenter un élément de réseau de façon schématique ou symbolique, alors que les éléments graphiques S₁, S_{2,} S₃, et S₄ représentent des vues détaillées de ce même élément de réseau (par exemple des données textuelles).

On comprend aisément par cet exemple qu'il peut être utile de manipuler de façon similaire ces différents éléments graphiques. Typiquement, si l'utilisateur choisit de fermer l'élément graphique M₁ (en utilisant le premier bouton F_{F}), alors les éléments graphiques ayant une relation de dépendance avec celui-ci doivent aussi être fermés automatiquement, c'est-à-dire les éléments graphiques S₁, S₂, S₃ et S₄.
De la même façon, si les éléments graphiques M₁, M₂, S₁, S₂, S₃ et S₄ sont contenus dans une fenêtre possédant des dispositifs (communément appelés « ascenseurs ») permettant de faire dérouler son contenu dans une fenêtre de visualisation, il peut arriver que l'élément graphique M₁ (par exemple) passe d'un état visible à un état invisible ou réciproquement. En un tel cas, on peut utiliser le principe de l'invention afin d'associer les éléments graphiques S₁, S₂, S₃ et S₄ à l'élément graphique M₁, afin que les éléments graphiques S₁, S₂, S₃ et S₄ suivent l'évolution de l'état de l'élément graphique M₁.

Préférentiellement, les moyens d'association sont accessibles par l'utilisateur de l'interface utilisateur, durant son fonctionnement, en utilisant le mécanisme des événements par exemple. Autrement dit, l'utilisateur peut à tout moment choisir d'associer un élément graphique à un autre, ou au contraire de terminer une association existante, en envoyant un événement à l'élément graphique concerné.
Ceci peut être réalisé en ajoutant un bouton permettant l'accès aux moyens d'association. Ce bouton peut, par exemple, être similaire aux boutons F_{F}, F_{I} tels que représentées sur la figure 2. Après avoir cliqué sur ce bouton, l'utilisateur choisit l'élément graphique auquel il va associer l'élément graphique concerné. Ceci peut être fait au moyen d'une liste déroulante reprenant l'ensemble des éléments graphiques, ou, plus simplement, en cliquant sur un élément graphique, ou par tout autre moyen imaginable.

Une fois l'association faite, l'élément graphique concerné (S₁, S₂, S₃ ou S₄) peut envoyer un message (ainsi qu'il est classiquement fait) à l'élément graphique M₁ auquel il a été associé afin de lui faire prendre connaissance de cette nouvelle association.
Le même principe est mis en oeuvre lors de la terminaison d'une association.

L'élément graphique M₁ ayant la connaissance des associations le concernant, il est à même, à la réception d'un événement, de le transmettre aux éléments graphiques S₁, S₂, S₃ et S₄. Pour ce faire, l'élément graphique M₁ dispose donc d'un moyen de mémorisation, lui permettant de tenir à jour la liste des éléments graphiques auquel il est associé.

A la réception des événements, les éléments graphiques S₁, S₂, S₃ et S₄ peuvent soit avoir le comportement correspondant à cet événement, soit l'ignorer. Ce choix peut être déterminé par l'utilisateur durant le fonctionnement de l'interface graphique. En effet, préférentiellement, les éléments graphiques S₁, S₂, S₃ et S₄ possèdent des moyens pour mémoriser des paramètres associés à chaque type d'événements, afin de déterminer leur comportement à la réception d'un événement.

Ces paramètres peuvent être un simple drapeau précisant si l'événement doit être pris en compte. L'utilisateur peut alors simplement préciser si l'élément graphique doit suivre le comportement de l'élément graphique M₁ auquel il est associé, pour chaque type d'événements (fermeture, mise en icône, déplacement etc.)

Ces paramètres peuvent aussi préciser des comportements plus subtils. Par exemple, on peut préciser une distance entre les deux éléments graphiques associés, cette distance étant associée à un type d'événement « déplacement ». Cela signifie par exemple, que lorsqu'on déplace l'élément graphique M₁, l'élément graphique S₁ (par exemple) ne sera déplacé que si la distance qui les sépare est supérieure à la distance précisée en paramètre.

Selon l'invention, on peut aussi prévoir que lorsque l'utilisateur envoie un événement de type prédéterminé, tel un déplacement, à un élément graphique S₁, S₂, S₃ ou S₄, cela signifie que l'association avec l'élément graphique doit être terminée. Comme évoqué précédemment, la terminaison d'une association peut être effectuée au moyen d'un envoi de message à destination de l'élément graphique M₁.
Selon une autre mise en oeuvre, l'association est maintenue mais les paramètres sont fixées de sorte que l'élément graphique en question ne prenne plus en compte les événements futurs qui lui proviennent de l'élément graphique M₁, sauf éventuellement ceux du type « fermeture ».

## Revendications

1. Procédé pour manipuler sur un moyen de visualisation (E), un ensemble d'éléments graphiques et d'interface (M₁, M₂, S₁, S₂, S₃, S₄) représentés sur une fenêtre graphique et dont le comportement est déterminé par des événements, **caractérisé en ce que**
• On associe au moins un premier élément graphique ou d'interface (S₁, S₂, S₃, S₄) à un second élément graphique (M₁, M₂),
• À la réception d'un événement, ledit second élément graphique transmet ledit événement audit au moins un premier élément graphique ou élément d'interface.

2. Procédé selon la revendication 1, dans lequel l'association est faite par l'utilisateur en envoyant un événement à l'élément graphique ou à l'élément d'interface concerné.

3. Procédé selon l'une des revendications 1 ou 2, dans lequel pour chacun desdits au moins un premier élément, on détermine des paramètres associés à chaque type d'événements afin de déterminer le comportement dudit premier élément à la réception d'un événement.

4. Procédé selon l'une des revendications précédentes, dans lequel lorsque l'un desdits premiers éléments reçoit un événement de type prédéterminé, l'association avec ledit second élément graphique est terminée.

5. Procédé selon la revendication 3, dans lequel lorsque l'un desdits premiers éléments reçoit un événement de type prédéterminé, lesdits paramètres sont fixés de sorte que ledit premier élément ne réagisse plus audits événements futurs transmis par ledit second élément graphique.

6. Interface graphique composée d'un ensemble d'éléments graphiques ou d'interface (S₁, S₂, S₃, S₄, M₁, M₂) dont le comportement est déterminé par des événements, **caractérisée en ce que** chaque premier élément graphique ou d'interface (S₁, S₂, S₃, S₄) possède des moyens d'association pour l'associer à un second élément graphique (M₁, M₂), et **en ce que** ledit second élément graphique possède des moyens pour transmettre les événements qu'il reçoit vers lesdits premiers éléments graphiques ou d'interface auquel il est associé.

7. Interface graphique selon la revendication précédente, dans laquelle chaque premier élément graphique ou d'interface possède des moyens pour mémoriser des paramètres associés à chaque type d'événements, afin de déterminer le comportement dudit premier élément graphique ou d'interface à la réception d'un événement.

8. Interface graphique selon l'une des revendications précédentes, dans laquelle lesdits moyens d'association sont accessibles par l'utilisateur durant le fonctionnement de ladite interface graphique.
